Europäisches Patentamt

European Patent Office

Office européen des brevets

(11) Publication number: **0 042 591**
B1

(19)

(12) **EUROPEAN PATENT SPECIFICATION**

(45) Date of publication of patent specification: **28.03.84**

(21) Application number: **81104678.8**

(22) Date of filing: **17.06.81**

(51) Int. Cl.³: **A 47 J 31/60,
G 07 F 13/06, B 08 B 9/06**

(54) **An automatic beverage vending machine having a water-feed system and a circuit for washing the water-feed system.**

(30) Priority: **24.06.80 JP 88584/80 U
18.09.80 JP 132694/80 U**

(43) Date of publication of application:
**30.12.81 Bulletin 81/52**

(45) Publication of the grant of the patent:
**28.03.84 Bulletin 84/13**

(84) Designated Contracting States:
**DE FR GB IT**

(56) References cited:
**FR - A - 2 264 240
GB - A - 342 808
GB - A - 2 031 378
US - A - 3 338 153
US - A - 3 390 626
US - A - 3 638 448**

(73) Proprietor: **FUJI ELECTRIC CO., LTD.
1-1, Tanabeshinden, Kawasaki-ku
Kawasaki-shi Kanagawa 210 (JP)**

(72) Inventor: **Iwanami, Masao
663-151, Nomachi Suzuka-shi Mie
JP (JP)**

(74) Representative: **Blumbach Weser Bergen Kramer
Zwirner Hoffmann Patentanwälte
Radeckestrasse 43
D-8000 München 60 (DE)**

Courier Press, Leamington Spa, England.

An automatic beverage vending machine having a water-feed system and a
circuit for washing the water-feed system

The present invention relates to an automatic beverage vending machine which serves cool drinks in cups according to the pre-characterising portion of claim 1.

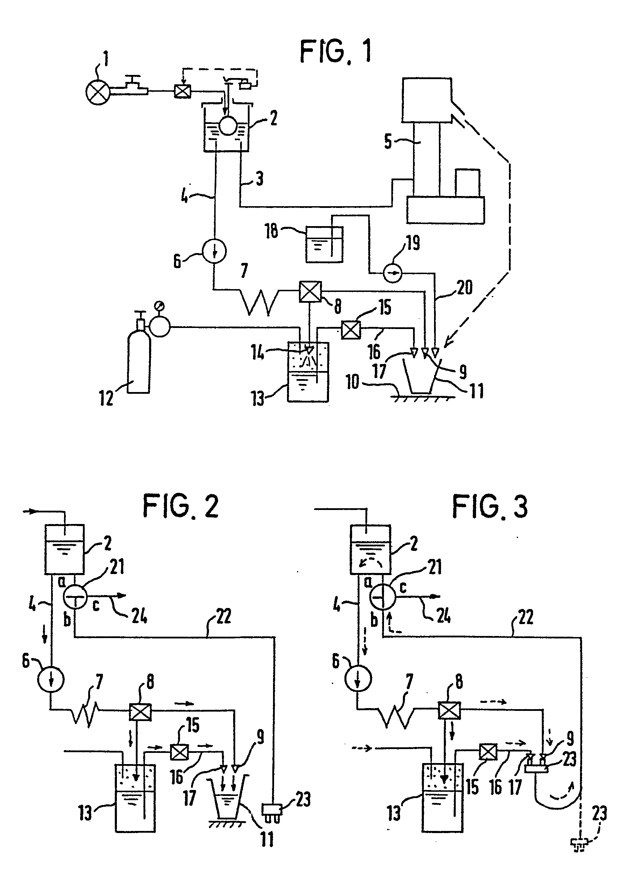

First, Fig. 1 illustrates a beverage system in an automatic vending machine which serves beverages in cups. In Fig. 1, two water-feed pipes 3, 4 are drawn from a water reservoir 2 equipped with a float valve, which is connected to a water supply 1 such as town water, and which is installed in a housing. One pipe 3 is connected to an ice-making machine 5 to supply water. Another pipe 4 works to supply cold water via a water-feed pump 6, a cooling coil 7 which is immersed in a cold-water vessel which is not shown and a water-feed valve 8, with a nozzle 9 which faces a cup 11 placed on a vending stage 10. In an automatic vending machine which is designed to serve carbonated water, a spray nozzle 14 branching from the water-feed valve 8 is connected to a carbonator 13 which is connected to container 12 for carbon dioxide gas, and a nozzle 17 at the end of a carbonated water-feed pipe 16 drawn from the carbonator 13 via a carbonated water valve 15 faces the cup 11 in parallel with the nozzle 9. The syrup which is the raw material of the beverage is supplied to the cup 11 from a syrup tank 18 via a syrup-feeding pipe 20 which is drawn via a syrup pump 19.

The operation of beverage-vending machines is well known. Responsive to the vending instructions, the valve, pump and ice-making machine all operate, while the syrup, cold water, carbonated water and ice are supplied in predetermined amounts as selected by the customer to the cup 11 placed on vending stage 10.

Not all automatic vending machines have an ice-making machine 5 or a carbonator 13.

From the hygienic standpoint, it is strictly necessary to sterilize and wash regularly the water-feed system of automatic vending machines of this type. To wash the water-feed system, a sterilizing solution (hereinafter simply described as "washing solution") is prepared. Then when the water-feed system is to be washed, the washing solution is supplied to wash it. According to the conventional method of washing the water-feed system, the washing solution is prepared beforehand, water is first drained from the water-feed pipes, a cover is removed from the water-tank 2, and the washing solution is poured into the water-tank 2. The washing solution is allowed to stay in said water-tank 2 for about 30 minutes. Then the valves are opened, the pump begins to operate, and the water solution is drained from the nozzle. Thereafter tap water is supplied to the water-tank 2 and the same operation is repeated to finish the washing process.

According to the conventional method for washing, the nozzle at the end of the water-feed pipe is open to face the vending stage. Therefore the washing and sterilization are effected by having the washing solution remain in the water-feed pipes for extended periods of time. With the above-mentioned conventional method, however, the extended periods required to effect the washing imply that the vending operation has to be halted for lengthy periods. Furthermore, during most of the washing stage, the washing solution remains at rest and is neither agitated nor fluidized. Accordingly the washing effect is small. Therefore it has been found desirable to provide a washing system which is capable of efficiently performing the washing within short time periods.

From US—A—3,638,448 an automatic beverage vending machine is known having a water reservoir connected via a water supply line, a water pump, a cooling coil and a valve to a carbonator. A flexible pump output line connects the water pump to the cooling coil via a quick connect and disconnect coupler. In order to establish a cleaning circuit the flexible pump output line is disconnected from the cooling coil and connected to a branched tube one branch of which communicates with the water reservoir, the other with an ice maker. From the water supply line a further branch tube is connected to the ice maker so that the washing circuit includes the water reservoir, the ice maker and the water pump. It does not include the portion of the water feed system connecting the outlet of the water pump with a nozzle delivering the water into a cup.

The invention as claimed is intended to remedy the above-mentioned problems. It solves the problem of how to provide a washing circuit for efficiently washing the water-feed system within short periods of time.

According to the present invention, this problem is solved by the features in the characterising parts of claims 1, 2. When washing the water-feed system, a washing liquid is supplied into the water-feed conduit by the pump and is then recovered from a nozzle and forcibly refluxed into the intake side of said pump by drawing a branch tube from the upstream side of the water-feed pump, the branch tube being communicated with the water-feed conduit via a switch-cock, while the tip of a hose is connected with the branch tube, the tip of said hose being detachably connected to the nozzle of the water-feed conduit.

In the present invention the water-feed pump in the water-feed system is used when the water-feed system is to be washed, the washing liquid is forcibly circulated through the circuit composed of water-feed pipes and a newly provided washing circuit. Accordingly the washing effect can be greatly enhanced as compared with the conventional washing system which effects the washing by having the washing liquid remain in the system, while the time required to finish the washing can be greatly shortened.

The invention will be explained below in detail with reference to the embodiments shown in the drawings.

Figure 1 is a diagram of the beverage system of an automatic vending machine which serves beverages in cups.

Figs. 2 and 3 are circuit diagrams illustrating the state when the vending machine according to an embodiment of the present invention is engaged in vending and the state when the vending machine is being washed respectively;

Figs. 4, 6, 8 and 9 are circuit diagrams when the vending machine is washed according to further embodiments of the present invention; Figs. 5 and 7 are circuit diagrams when the vending machines shown in Figs. 4 and 6 are in vending operation; Fig. 10 is a cross-sectional view of a switch-cock; and Fig. 11 is a cross-sectional view of a connection fitting.

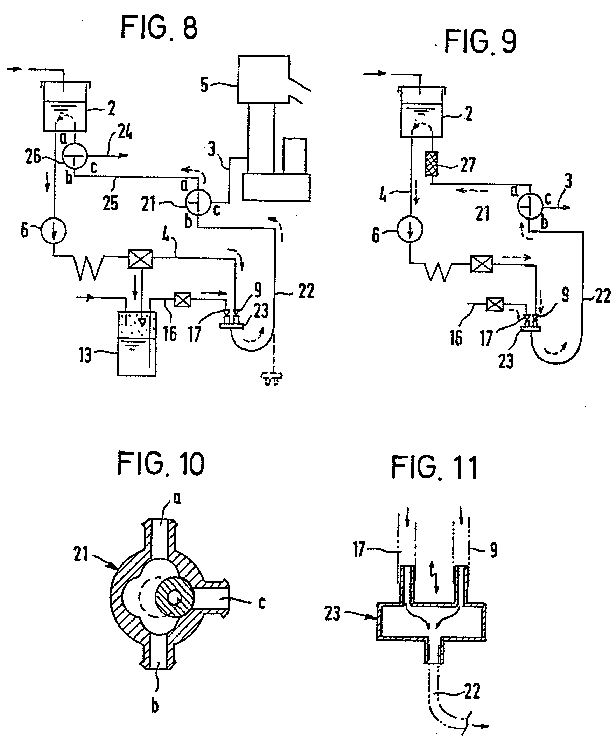

Figs. 2 and 3 respectively illustrate the state when the beverage is being sold, and the state when the water-feed system is being washed, according to an embodiment of the present invention. Fig. 2 and subsequent drawings do not illustrate the syrup-feed pipe which was shown in Fig. 1. Referring to Fig. 2, a switch cock 21 consisting of a 3-way cock is connected to the water tank 2 which is located upstream of the water-feed pump 6, and a hose 22 which is used as the washing solution return line is connected to a branch tube which is so designed that it communicates with the cold-water feed pipe 4 via tank 2 and via the switch cock 21. The hose 22 may be a flexible hose, having a connector 23 at the tip thereof, which can be detachably connected to nozzles 9, 17 of the water-feed pipes 4, 16; the washing circuit is formed by these means. Fig. 10 illustrates the switch cock 21, comprising a three-way cock. The housing of said cock has first, second and third ports a, b and c. By selectively moving a roller-type plug along the length of a dotted line, the ports a-b, a-c, b-c, or a-b-c can be interconnected. With reference to Fig. 2, the first port a is connected to the water-tank 2, the second port b connects with the hose 22, while the third port c is connected to a drain hose 24. The connector 23 is designed in the form of a forked plug as shown in Fig. 11, and can be detachably connected to nozzles 9, 17.

The operation of the washing circuit will be explained below. First, when the automatic vending machine is in the vending mode, the connector 23 of the hose 22 is separated from nozzles 9, 17 as shown in Fig. 2, while switching cock 21 is set to a switching position as illustrated such that port a does not communicate with ports b or c. Therefore water in the water-tank 2 is supplied to the cup 11 via the water-feed pipe 4, and the automatic vending machine performs its normal vending operations. When the water-feed system is to be washed, by interrupting the vending operation all the residual water in the water-feed system is drained off. Then the connector 23 is connected to nozzles 9, 17 as shown in Fig. 3, and the switch cock 21 is switched to a position in which port a connects with port b. Referring to Fig. 3, therefore, a circuit is formed passing through water-tank 2, water-feed pump 6, water-feed valve 8, nozzle 9, connector 23, hose 22, switch cock 21 and water tank 2. In this condition, the washing/sterilizing solution is poured into water-tank 2, the water-feed valve 8 is opened and water-feed pump 6 is actuated. Therefore the washing solution is caused to flow continuously and under force through the circuit as indicated by the dotted arrows, thereby washing the water-feed system. With the above forced-circulation washing system, the washing effect is much greater than that of the conventional static washing system, and the washing time can be greatly reduced. The increased washing effect has been proven by a test using production machines. When the washing operation is over, switch cock 21 is so adjusted that port a connects with port c. In this condition, the solution is fed by the pump 6 so that the used washing solution is drained from the system via a drain hose 24. Further, to wash the carbonated water-feed pipe 16, water-feed valve 8 is switched toward the carbonator 13, and the pressure of carbon dioxide gas is applied to the carbonator; the carbonated water-feed pipe 16 can be washed in the same manner as the above-mentioned water-feed pipe 4. The used washing solution may be drained without using the drain hose 24 but by separating connector 23 from the nozzles. In this case the switch cock 21 need not be a three-way cock, but may simply be a switch cock which opens and closes.

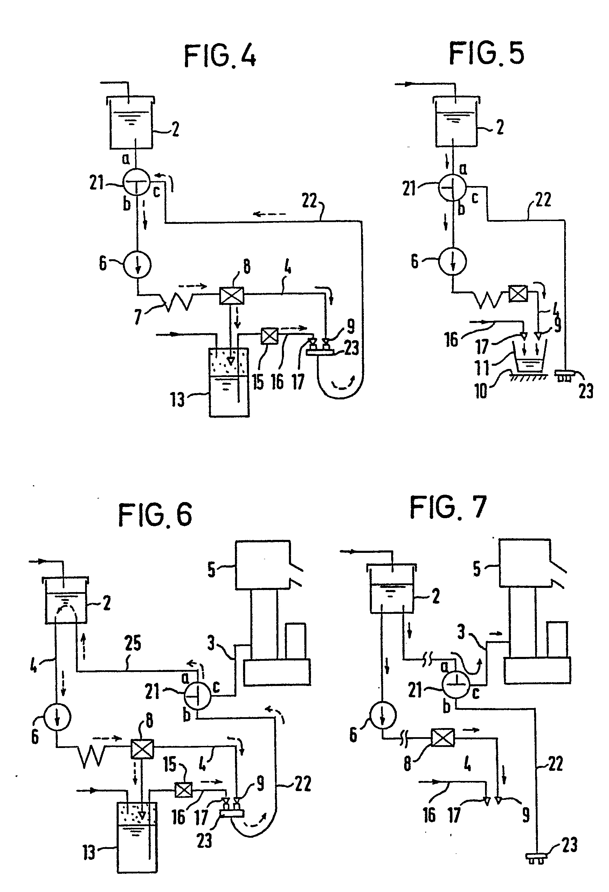

The above embodiment has dealt with the case in which the switch cock 21 is connected to the water-tank 2 separately from the water-feed pipe 4. Figs. 4 and 5 illustrate another embodiment in which a three-way cock is used as the switch cock 21 and is directly inserted in the water-feed pipe 4 between the water-feed pump 6 and the water tank 2, while further the hose 22 is connected to the third port c of the three-way cock. Fig. 4 illustrates the case when the machine is being washed, and Fig. 5 shows the case when the machine is in the vending mode. In this embodiment, also, the washing is performed by continuously and forcibly passing the washing solution through the circuit which passes via water-feed pump 6, valve 8, nozzles 9, 17, connector 23, hose 22, switch cock 21 and water-feed pump 6, just as in the above embodiment.

Figs. 6 and 7 illustrate an embodiment in which an ice making machine is combined with the water-feed pipe relying on the embodiment in Fig. 2. Namely in Fig. 2 the drain hose 24 is connected to the third port c of switch cock 21. In the embodiment of Fig. 6, on the other hand, a water-feed pipe 3 which connects with a water-feed port of the ice-making machine 5 is also linked to the third port c of the switch cock 21 instead of the drain hose 24. During the vending operation, the switch cock 21 is set in a position where port a opens to connect with port c, so that water is supplied from water-tank 2 to the ice making machine 5.

To wash the water-feed system, valves 8 and 15 are opened, the pump is actuated, residual water is drained from the water-tank 2 and from water-feed pipes 4, 16, the switch cock 21 is moved to a position where the ports a, b, and c are connected to each other, so that residual water is drained from ice making machine 5, from water-feed pipe 3 and from a pipe 25 which connects the water-tank 2 with switch cock 21, via hose 22. Then, referring to Fig. 6, connector 23 of the hose 22 is connected to nozzles 9, 17 and switch cock 21 is set to the position where port a connects with port b. Thus there is formed a circuit which is the same as that of the above embodiment. Now the washing solution is poured into water-tank 2, the valve is opened and pump 6 is actuated. Therefore the washing solution is forced through the circuit of water pipes 4, 16 to wash them. Then, connector 23 still being connected to the nozzles, switch cock 21 is switched to the position in which port b connects with port c, and the washing solution is pumped as in the above embodiment. The washing solution washes the interior of the water-feed pipe 3 and of ice making machine 5, and is drained from an outlet port of the ice making machine 5. Finally fresh water is supplied to the water-tank 2 instead of the washing solution, and the operation is repeated in the same manner as above to finish the washing cycle. In this embodiment, the ice making machine 5 and the pipe 3 for feeding water to the ice making machine can be washed in a series of steps. When the pipe which leads to the ice making machine 5 is not so seriously contaminated, connector 23 may be detached from the nozzles after the water-feed pipe 4 has been washed, and the washing solution in the water-tank 2 may be drained by its own weight through hose 22.

According to the above embodiments, the washing solution circulates through the water-feed system while it is being washed. Therefore foreign matter such as deposits which adhere to the walls of the pipes of the water-feed routes may become detached and circulate through the pipes together with the washing water. Consequently, deposits may enter the small clearances of the water-feed pump 6, valve 8, valve 15 and the like, causing problems. Figs. 8 and 9 illustrate embodiments to cope with the above situation. In the embodiment of Fig. 8, first a drain cock 26 consisting of a three-way cock is inserted in pipe 25 which connects water-tank 2 to the switch cock 21 at a position close to water-tank 2 to remove suspended foreign matter such as deposits. Drain hose 24 is now connected to the third port c. During normal operations, drain cock 26 connects port a to port b. During the washing stage, drain cock 26 is switched to a position such that port b connects with port c. Thus drain cock 26 is switched to the position illustrated, and water-feed pump 6 is operated during the initial washing period when the washing solution circuit is formed by connecting the tip of hose 22 to the nozzles 9, 17.

Therefore the foreign matter such as deposits detached from the walls of the water-feed pipes due to the washing solution supplied under pressure does not flow into the water-feed pump 6 nor into water-feed valve 8 via the water tank 2, but is removed from the system via drain cock 26 and drain hose 24. In particular, the ice making machine 5 makes large amounts of ice at one time, stores it in a refrigeration chamber, and does not start the ice-making operation until all the ice has been used. Therefore water remains longer in the pipe for feed water to the ice making machine 5 than in the water feed pipe 4, through which water flows for each vending operation. Therefore deposits tend to build up in the pipe for feeding water to the ice making machine. Accordingly it is very effective to drain a part of the water in the pipe through the drain cock 26 in order to remove deposits from the pipe which supplies water to the ice making machine. From the same point of view, furthermore, three-way cock 21 is preferably installed at a position as close as possible to ice making machine 5. After ports b and c of the drain cock 26 have been connected to each other for a suitable period, drain cock 26 is returned again to the position where port a connects with port b, and the washing solution is forcibly circulated through the water-feed system to continue the washing operation.

Figure 9 illustrates a further embodiment in which a strainer 27 is detachably provided instead of drain cock 26 of Fig. 8, to remove the foreign matter. Therefore suspended matter such as deposits which flows toward the water-tank 2 during the washing stage are retained by the strainer 27, and are prevented from entering the water-feed pipe 4. Consequently the pumps and valves are freed from such problems as clogging. When the washing is ended, strainer 27 is removed and washed.

The drain cock 26 or strainer 27 for removing foreign matter as illustrated in the embodiments of Figs. 8 and 9 can also be applied to a circuit for washing the water-feed system which is not equipped with the ice making machine as shown in Figs. 2 or 4, to provide the same effect.

Further the valves, pump and switch cock in the above embodiments can be manually operated during the washing stage, or automatically controlled according to a predetermined program. Furthermore to carry out automatically the washing according to a program, a tank of washing solution is prepared beforehand in the automatic vending machine separately from the water-tank, a jet pump is installed in the circuit, said jet pump is operated during the stage in which water is circulated in the system so that the concentrated washing solution is inducted into the water-feed pipe.

## Claims

1. An automatic beverage vending machine having a water-feed system including a water-tank (2), a water-feed conduit (4), a water-feed pump (6), a water-feed valve (8) and a nozzle (9) facing a vending stage (10) to supply water from the water-tank (2) to a cup placed on the vending stage (10), and further having a circuit for washing the water-feed system by circulating a washing liquid through it, said circuit comprising a tube (22) connected from a tip (23) to a part of the water-feed system upstream of the water-feed pump (6), the tip (23) being detachably connectable to a part of the water-feed system downstream of the water-feed pump (6), characterised in that the tip (23) is detachably connectable to the nozzle (9) and that the end of the tube (22) opposite to the tip (23) is connected to one port (b) of a switch cock (21), another port (a) of which being connected to the water-tank (2).

2. An automatic vending machine according to the pre-characterising portion of claim 1, characterised in that the tip (23) is detachably connectable to the nozzle (9) and that the end of the tube (22) opposite to the tip (23) is connected to one port (c) of a three way switch cock (21) which, with its other two ports (a, b) is connected in the water-feed conduit (4).

3. An automatic beverage vending machine according to claim 1, wherein a drain hose (24) is connected to a third port (c) of the switch cock (21) which consists of a three-way cock.

4. An automatic beverage vending machine according to claim 1, wherein a conduit (3) for the supply of water to an ice making machine (5) is connected between a third port (c) of the switch cock (21) consisting of a three-way cock and a water-feed port of the ice making machine (5).

5. An automatic beverage vending machine according to claim 4, wherein a drain cock (26) is provided between the switch cock (21) and the water-tank (2).

6. An automatic beverage vending machine according to claim 4, wherein a strainer (27) is provided between the switch cock (21) and the water-tank (2).

7. An automatic vending machine according to any of claims 1 to 6, characterised in that the water-feed system includes a carbonator (13) connected to the water-feed valve (8) and a second nozzle (17) parallel with the first nozzle (9) and connected to the carbonator (13) via a carbonated water-feed pipe (16) and a carbonated water valve (15), said tip (23) being detachably connectable to both nozzles (9, 17).

## Patentansprüche

1. Getränkeverkaufsautomat mit einem Wasserspeisesystem, das einen Wasserbehälter (2), eine Wasserspeiseleitung (4), eine Wasserspeisepumpe (6), ein Wasserspeiseventil (8) und eine Düse (9) aufweist, die einer Ausgabeplattform (10) zugewandt ist, um Wasser aus dem Wasserbehälter (2) zu einem auf die Ausgabeplattform (10) gestellten Becher zu liefern, und ferner mit einem Kreis zum Waschen des Wasserspeisesystems durch Zirkulation einer Waschflüssigkeit durch dasselbe, wobei der Kreis eine Rohrleitung (22) von einem Ende (23) zu einem Teil des Wasserspeisesystems stromauf der Wasserspeisepumpe (6) aufweist und das Ende (32) lösbar mit einem Teil des Wasserspeisesystems stromab der Wasserspeisepumpe (6) verbindbar ist, dadurch gekennzeichnet, daß das Ende (23) lösbar mit der Düse (9) verbindbar ist und daß das dem Ende (23) entgegengesetzte Ende der Rohrleitung (22) mit einer Öffnung (b) eines Umschalthahns (21) verbunden ist, der eine andere mit dem Wasserbehälter (2) verbundene Öffnung (a) aufweist.

2. Getränkeverkaufsautomat nach dem Oberbegriff des Anspruchs 1, dadurch gekennzeichnet, daß das Ende (23) lösbar mit der Düse (9) verbindbar ist und daß das dem Ende (23) entgegengesetzte Ende der Rohrleitung (22) mit einer Öffnung (c) eines 3-Wege-Umschalthahns (21) verbunden ist, dessen andere beiden Öffnungen (a, b) an die Wasserspeiseleitung (4) angeschlossen sind.

3. Getränkeverkaufsautomat nach Anspruch 1, bei dem ein Abflußschlauch (24) mit einer dritten Öffnung (c) des Umschalthahns (21) verbunden ist, bei dem es sich um einen 3-Wege-Hahn handelt.

4. Getränkeverkaufsautomat nach Anspruch 1, bei dem eine Leitung (3) für die Zuleitung von Wasser zu einer Eiserzeugungsmaschine (5) zwischen die dritte Öffnung (c) des als 3-Wege-Hahn ausgebildeten Umschalthahns (21) und eine Wasserspeiseöffnung der Eiserzeugungsmaschine (5) geschaltet ist.

5. Getränkeverkaufsautomat nach Anspruch 4, dadurch gekennzeichnet, daß ein Abflußhahn (26) zwischen dem Umschalthahn (21) und dem Wasserbehälter (2) vorgesehen ist.

6. Getränkeverkaufsautomat nach Anspruch 4, bei dem ein Filter (27) zwischen dem Umschalthahn (21) und dem Wasserbehälter (2) vorgesehen ist.

7. Getränkeverkaufsautomat nach einem der Ansprüche 1 bis 6, dadurch gekennzeichnet, daß das Wasserspeisesystem einen Kohlensäurezusetzer (13) umfaßt, der an das Wasserspeiseventil (8) angeschlossen ist, sowie parallel zur ersten Düse (9) eine zweite Düse (17), die mit dem Kohlensäurezusetzer (13) über eine Kohlensäurewasserspeiseleitung (16) und ein Kohlensäurewasserventil (15) verbunden ist, wobei das Ende (23) lösbar mit beiden Düsen (9, 17) verbindbar ist.

## Revendications

1. Un distributeur automatique de boissons ayant un système d'alimentation en eau comprenant un réservoir d'eau (2), un conduit d'alimentation en eau (4), une pompe d'alimentation en eau (6), une valve d'alimentation en eau (8) et une buse (9) faisant face à un plateau de distribution (10), pour verser de l'eau provenant du réservoir d'eau (2) dans un gobelet placé sur le plateau de distribution (10), et ayant en outre un circuit pour laver le système d'alimentation en eau, en y faisant circuler un liquide de lavage, ce circuit comprenant un tuyau (22) s'étendant entre un embout (23) et une partie du système d'alimentation en eau en amont de la pompe d'alimentation en eau (6), l'embout (23) pouvant être branché de façon amovible à une partie du système d'alimentation en eau en aval de la pompe d'alimentation en eau (6), caractérisé en ce que l'embout (23) peut être branché de façon amovible à la buse (9) et en ce que l'extrémité du tuyau (22) opposée à l'embout (23) est branchée à un orifice (b) d'un robinet de sélection de mode (21), dont un autre orifice (a) est relié au réservoir d'eau (2).

2. Un distributeur automatique selon le préambule de la revendication 1, caractérisé en ce que l'embout (23) peut être branché de façon amovible à la buse (9) et en ce que l'extrémité du tuyau (22) opposée à l'embout (23) est branchée à un orifice (c) d'un robinet de sélection de mode à trois voies (21) qui est branché par ses deux autres orifices (a, b) au conduit d'alimentation en eau (4).

3. Un distributeur automatique de boissons selon la revendication 1, dans lequel un tuyau souple de vidange (24) est branché à un troisième orifice (c) du robinet de sélection de mode (21), qui consiste en un robinet à trois voies.

4. Un distributeur automatique de boissons selon la revendication 1, dans lequel un conduit (3) destiné à alimenter en eau une machine de production de glace (5) est branché entre un troisième orifice (c) du robinet de sélection de mode (21), consistant en un robinet à trois voies, et un orifice d'alimentation en eau de la machine de production de glace (5).

5. Un distributeur automatique de boissons selon la revendication 4, dans lequel un robinet de vidange (26) est placé entre le robinet de sélection de mode (21) et le réservoir d'eau (2).

6. Un distributeur automatique de boissons selon la revendication 4, dans lequel une crépine (27) est placée entre le robinet de sélection de mode (21) et le réservoir d'eau (2).

7. Un distributeur automatique selon l'une quelconque des revendications 1 à 6, caractérisé en ce que le système d'alimentation en eau comprend un gazéificateur (13) branché à la valve d'alimentation en eau (8) et une seconde buse (17) parallèle à la première buse (9) et connectée au gazéificateur (13) par l'intermédiaire d'un tuyau d'alimentation en eau gazeuse (16) et d'une valve d'eau gazeuse (15), l'embout (23) pouvant être branché de façon amovible aux deux buses (9, 17).

# FIG. 1

# FIG. 2

# FIG. 3

# FIG.4

# FIG.5

# FIG.6

# FIG.7

FIG. 8

FIG. 9

FIG. 10

FIG. 11